# FASCICULE DE BREVET EUROPEEN

(11) **EP 0 606 238 B1**
(45) Date de publication et mention de la délivrance du brevet: **06.11.1996**
(21) Numéro de dépôt: 92918053.7
(22) Date de dépôt: 04.08.1992
(51) Int. Cl.: B60J 5/04

(54) **PLATINE DE PORTE DE VEHICULE INTEGRANT PLUSIEURS FONCTIONS ET PROCEDE DE MONTAGE**
HALTERUNG FÜR MEHRERE EINBAUTEN IN EINER FAHRZEUGTÜR UND EINBAUVERFAHREN FÜR DIE HALTERUNG
VEHICLE DOOR EQUIPMENT PLATE INCORPORATING SEVERAL FUNCTIONS AND METHOD OF FITTING

(43) Date de publication de la demande: 20.07.1994
(73) Titulaire: MECAPLAST SAM, MC-98000 Monaco (MC)
(72) Inventeur: MORANDO, Patrick, F-06000 Nice (FR)
(74) Mandataire: Debay, Yves
(86) Numéro de dépôt international: FR9200771
(87) Numéro de publication internationale: WO9403341

(56) Documents cités:
- EP-A- 0 385 823
- EP-A- 0 406 034
- EP-A- 0 427 153
- DE-A- 3 104 681
- US-A- 5 095 659

## Description

La présente invention concerne une platine de porte de véhicule intégrant plusieurs fonctions et un procédé de montage d'une telle platine.

Il est connu par le brevet américain 4 882 842 une méthode de simplification de l'assemblage en ligne des portes, consistant à fabriquer un panneau modulaire de garniture intérieure de porte, moulé et sur lequel on vient fixer les éléments mécaniques et électriques, tels que le moteur, le mécanisme lève-vitre, les poignées de porte, la poignée d'actionnement de la serrure, l'actionneur de verrouillage de porte, le panneau électrique de contrôle, la lumière intérieure, le repose bras, le moteur de commande du rétroviseur et le mécanisme de chauffage associé au rétroviseur, l'unité de multiplexage des signaux et le module électronique pour contrôler les différents éléments et les sièges actionnés électriquement.

Toutefois, ce panneau de garniture n'a absolument aucune intégrité structurelle améliorant la résistance de la porte assemblée et l'ensemble ne comprend pas les éléments tels que le guide-vitre et un élément d'entraînement attaché au bas de la vitre. De plus il est précisé page 7, lignes 60 à 62, qu'après que le panneau de garniture ait eu ses éléments mécaniques et électriques ajoutés, il peut être mis sur un stand de test et tous les assemblages testés mécaniquement et électriquement. Un tel assemblage vient ensuite s'accrocher sur les crochets (9) prévus à cet effet sur le cadre de la porte et le système lève-vitre vient s'emboîter dans les ouvertures (10) de l'élément d'entraînement de la vitre qui est guidé dans son coulissement par un guide-vitre (8) solidaire du cadre de la porte.

Etant donné que l'ensemble du panneau modulaire recouvre la surface de la porte, le cadre de porte doit, d'une part, avoir une conformation particulière et une constitution propre à assurer cette rigidité suffisante éliminant ainsi l'usage d'une porte de type traditionnel, et, le système de montage ne facilite pas, d'autre part, la liaison entre le lève-vitre et l'élément d'entraînement de la vitre (11). De plus le panneau de garniture a simplement une fonction de liaison entre les différents éléments mécaniques qui eux gardent leurs particularités constitutives et ne sont pas intégrés dans la structure.

Il est également connu par le brevet américain 4 648 208 une portière de type particulier pour automobile dans laquelle on monte un cadre de renforcement sur lequel un dispositif lève-vitre à pantographe est préassemblé et sur lequel sont fixées les charnières de porte et la serrure. L'élément est ensuite incorporé dans le cadre externe d'une porte sur lequel sont fixés une feuille externe et un panneau de garniture interne.

Ce document enseigne la nécessité d'un élément de renforcement ayant une structure rigide pour assurer à la porte la rigidité nécessaire.

Le brevet européen 0 427 153 enseigne une porte de structure particulière formée par une feuille externe et une feuille interne, la feuille interne présentant une ouverture sur la partie supérieure de façon qu'un cadre auto-portant, de préférence métallique, soit relié de façon amovible à la feuille interne. Ce cadre autoportant supporte les moyens de fermeture, les moyens de levage et de guidage de la vitre. Les moyens de levage comportent un bras de prolongement qui pivote entre une position de projection vers le bas permettant d'assurer le fonctionnement normal du lève-vitre et une position de replis pour le transport du cadre auto-portant. Ce cadre auto-portant comporte également un moyen de guidage pivotant entre une position de transport et une position de fonctionnement pour assurer le guidage de la vitre.

La porte de ce dispositif doit encore avoir une structure spécifique.

Enfin, le brevet US 4 603 894 enseigne un assemblage de porte comportant monté sur une poutre principale la poignée intérieure de porte, l'actionneur de verrouillage, les différents leviers à genouillères et les barres de connexion ainsi qu'un flanc de rigidification sur la bordure supérieure de la poutre pour assurer une fonction de protection contre la violation.

Un tel dispositif ne comporte pas de lève-vitre et nécessite une découpe importante dans la porte pour permettre son montage, ce qui nuit à la rigidité de la carcasse de la porte pendant les opérations de fabrication et le stockage intermédiaire en vue de l'assemblage.

Un premier but de l'invention est de proposer une platine de porte intégrant plusieurs fonctions, cette platine pouvant s'adapter sur une porte de structure traditionnelle dans laquelle la carcasse de la porte est formée d'une feuille métallique externe associée de façon solidaire d'une feuille métallique interne constituant une coquille assurant à la porte une rigidité suffisante pour porter les éléments de la porte et le cadre entourant la vitre.

Ce but est atteint par le fait que la platine de porte de véhicule intégrant la fonction lève-vitre et au moins une autre fonction est caractérisée en ce qu'elle est incorporée dans une porte de structure traditionnelle, constituée par une coquille emboutie formée d'un panneau métallique extérieur relié à un panneau métallique intérieur découpé de façon à présenter au moins deux ouvertures séparées par un lien de tôle de rigidification disposé de façon substantiellement transversale par rapport à une direction longitudinale de la porte, une des ouvertures permettant le passage d'un élément guide-vitre, cet élément étant intégré à une extrémité de la platine qui est réalisée en matière plastique moulée et la deuxième ouverture permettant le passage de la partie de platine supportant la fonction lève-vitre de façon que les parties de platines constituant la fonction lève-vitre et la fonction guide-vitre soient situées dans un même plan à l'intérieur de la coquille alors qu'au moins une partie de la platine est montée à l'extérieur de la coquille sur le lien de tôle de rigidification.

Selon une autre particularité, la partie de platine constituant la fonction lève-vitre est constituée d'une poutre transversale moulée et disposée de façon substantiellement transversale par rapport à une direction principale de la platine constituée notamment par une poutre principale à une extrémité de laquelle est disposée la fonction guide-vitre.

Selon une autre particularité, la poutre comporte à l'extrémité opposée de celle comportant la fonction guide-vitre un support permettant la fixation du mécanisme de serrure.

Selon une autre particularité, ledit support comporte une excroissance vers le haut constituant un guide pour la tringle du bouton voyant de fermeture de porte.

Selon une autre particularité, la poutre principale comporte entre le guide-vitre et le lève-vitre une excroissance vers le haut formant un logement pour le mécanisme de poignée intérieure de commande d'ouverture de porte, ledit logement comportant des perçages pour recevoir l'axe de pivotement de la poignée et étant pourvu d'une lumière permettant le passage de la tringle de commande reliant la poignée intérieure au mécanisme de serrure.

Selon une autre particularité, la poutre comporte à proximité de l'extrémité supportant le guide-vitre une excroissance orientée vers le bas et destinée à former un logement pour recevoir un haut-parleur.

Selon une autre particularité, les extrémités de la poutre transversale constituent des logements pour les axes de pivotement des poulies montés à chaque extrémité de la poutre transversale pour constituer les éléments de guidage d'un câble d'entraînement d'un cavalier lève-vitre monté coulissant sur un des éléments longitudinaux de la poutre transversale.

Selon une autre particularité, l'élément longitudinal de la poutre comporte une lèvre formant une équerre sous laquelle vient glisser un patin relié par des moyens au cavalier lève-vitre.

Selon une autre particularité, la poutre principale comporte un évidement permettant le montage du moteur électrique d'entraînement d'une poulie d'actionnement du câble.

Selon une autre particularité, la poutre comporte une gorge permettant la mise en place d'un faisceau de conducteurs électriques destinés à transmettre les signaux électriques vers le moteur lève-vitre, la serrure électrique et le haut-parleur.

Selon une autre particularité, la platine est montée sur la feuille métallique interne de la porte par des vis de fixation situées à proximité des points intégrant les éléments mécaniques supportant des efforts.

Selon une autre particularité, le guide-vitre est fixé à ses extrémités sur la porte.

Selon une autre particularité, la poutre transversale de support du chariot lève-vitre est fixée à proximité des deux extrémités supportant les poulies de renvoi.

Selon une autre particularité, la platine est également fixée à proximité du logement recevant la poignée d'actionnement du mécanisme d'ouverture et de fermeture de porte.

Un autre but de l'invention est de proposer un procédé de montage de la platine selon une des particularités précédentes.

Ce but est atteint par le fait que le procédé de montage d'une platine selon une des particularités précédentes consiste :
- à glisser l'extrémité du guide-vitre et de la poutre lève-vitre sous les ouvertures du panneau métallique intérieur embouti en positionnant le reste de la platine sur la forme correspondante prévue à cet effet sur le lien du panneau intérieur ;
- à fixer le guide-vitre, la poutre lève-vitre, la partie support de la poignée d'actionnement, et le support de haut-parleur sur le panneau intérieur par des vis placées à proximité des points d'effort.

D'autres particularités et avantages de la présente invention apparaîtront plus clairement à la lecture de la description ci-après faite en référence aux dessins annexés dans lesquels :
- la figure 1 représente une vue en perspective éclatée de la platine de porte intégrant plusieurs fonctions selon l'invention ;
- la figure 2 représente une vue en perspective et éclatée de la porte sur laquelle est montée la platine de porte ainsi que les éléments de garniture intérieure de cette porte ;
- la figure 3 représente une vue en perspective de la platine selon l'invention vue de l'autre côté par rapport à la figure 1 ;
- la figure 4 représente une vue en plan de la platine montée à l'intérieur d'une porte traditionnelle selon l'invention.

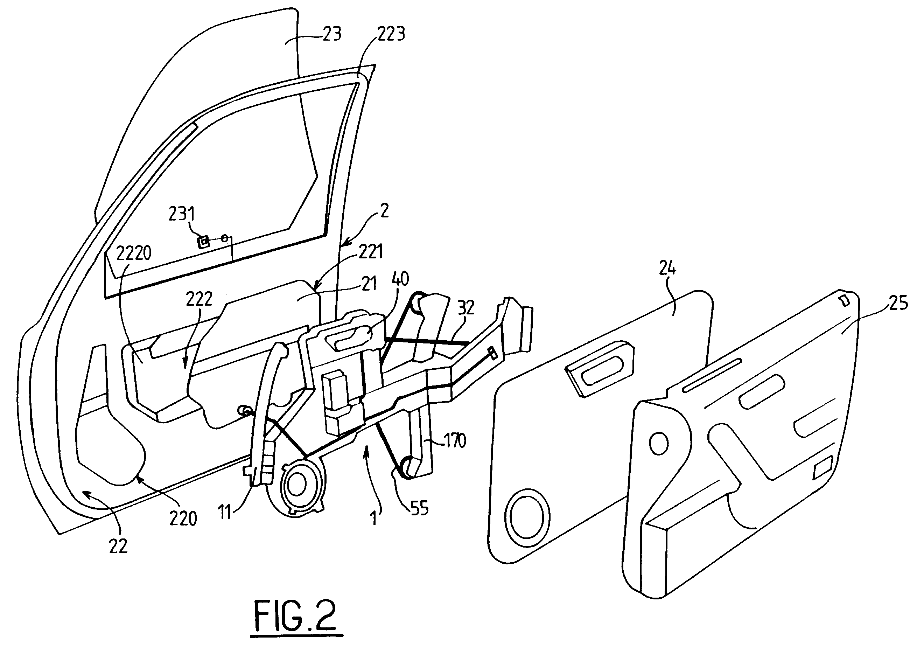

La platine de porte selon l'invention est constituée d'une pièce (1) en matière plastique moulée, formée principalement d'une poutre principale (15), à une extrémité de laquelle est formé un élément guide-vitre (11) à section substantiellement en forme de U et dont les jambes du U sont orientées de façon parallèle au flanc externe de la porte de véhicule, représenté à la figure 2. La porte de véhicule est de type traditionnel et constituée d'une feuille métallique (21) constituant l'enveloppe extérieure d'une coquille, cette enveloppe extérieure (21) étant rendue solidaire d'une enveloppe intérieure (22) formant ainsi la coquille ou carcasse de la porte qui se prolonge vers le haut par un cadre (223) destiné à recevoir la vitre (23). La tôle intérieure (22) comporte deux ouvertures (220, 221) séparées par un lien de rigidification (222) dans lequel des bossages (2220) sont pratiqués pour se conformer à la forme de la partie de platine qui vient se monter à cet endroit. L'élément guide-vitre (11) est décalé par rapport au plan de la poutre (15) vers l'arrière de la figure (1) et se trouve raccordé au plan de cette poutre (15) par une jonction (116). Cette poutre principale (15) se prolonge vers le bas et à proximité de l'élément guide-vitre (11) par une excroissance (16) comportant un logement (160) destiné à recevoir un haut-parleur (6). Cette excroissance (16) comporte au moins un perçage (161) pour recevoir une vis de fixation de la platine sur la tôle interne (22).

De même, le guide-vitre (11) comporte à chacune de ses extrémités des pattes (111, 112) percée chacune par un trou fileté permettant la mise en place d'une vis de fixation qui maintiendra les extrémités de guide-vitre sur la feuille interne (22) de la carcasse de porte.

La poutre principale (15) comporte à l'extrémité opposée au guide-vitre (11) un élément (170) constituant une poutre transversale (170) dont la section est formée substantiellement par un parallélépipède (1700) qui se prolonge sur un côté par une lèvre (1701) se situant dans le prolongement d'un des côtés du parallélépipède perpendiculaire à la poutre (15). Perpendiculairement à cette lèvre (1701) et sur le côté opposé du parallélépipède, une lèvre (1702) se raccorde à ce côté opposé pour former ainsi une équerre sur laquelle coulisse un cavalier lève-vitre (73) de forme parallélépipédique et comportant en son centre une gorge conformée en équerre de façon à s'adapter à la forme de lèvre (1702).

Des vis (76) associées à des ressorts (77) viennent appuyer sur le côté longitudinal de la poutre (170) pour maintenir le cavalier (173) en appui le long de la même face de référence de la poutre (170).

Un téton (74) monté sur le cavalier (73) permet la fixation de la vitre (23) par un orifice (231, figure 2) prévu sur la vitre (23) qui est maintenue solidaire du téton (74) par une rondelle circlips (75). Le cavalier (73) est entraîné en translation le long de la poutre transversale (170) par un câble (55) passant autour de poulies (71, 72) montées aux extrémités de la poutre (170) sur des excroissances (171, 172) décalées latéralement par rapport à la surface de guidage (1702) pour permettre le coulissement maximum du cavalier.

Les poulies (71, 72) sont montées sur des axes de pivotement disposés dans des perçages (1710, 1720) qui débouchent sur l'autre face par des trous filetés servant de points de fixation des vis de fixation des extrémités de la poutre transversale sur la tôle intérieure (22) de la carcasse de porte.

Le câble (55) vient s'enrouler autour d'une poulie de transmission (54) qui elle-même est montée pivotante sur la partie centrale (15) de la poutre, cette poulie intermédiaire étant entraînée par un système à embrayage progressif formé des éléments (53, 51, 52) et dont l'axe (51) transmet le mouvement d'entraînement à travers la poutre (15) par l'ensemble moteur réducteur (5). L'ensemble moteur-réducteur (5) est monté dans un évidement (150) formant le logement pour cet ensemble.

Le chariot (73) se trouve substantiellement dans le plan de l'élément guide-vitre (11) et l'ensemble se trouve dans le plan du cadre (223) et en particulier de la garniture intérieure (2233) de guidage de la vitre (23) dans le cadre (223).

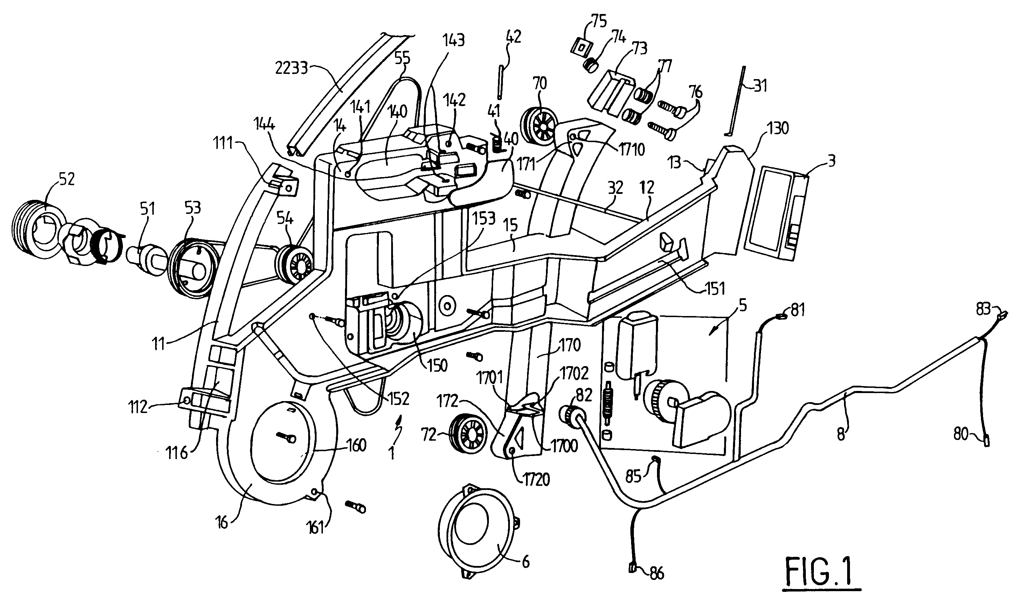

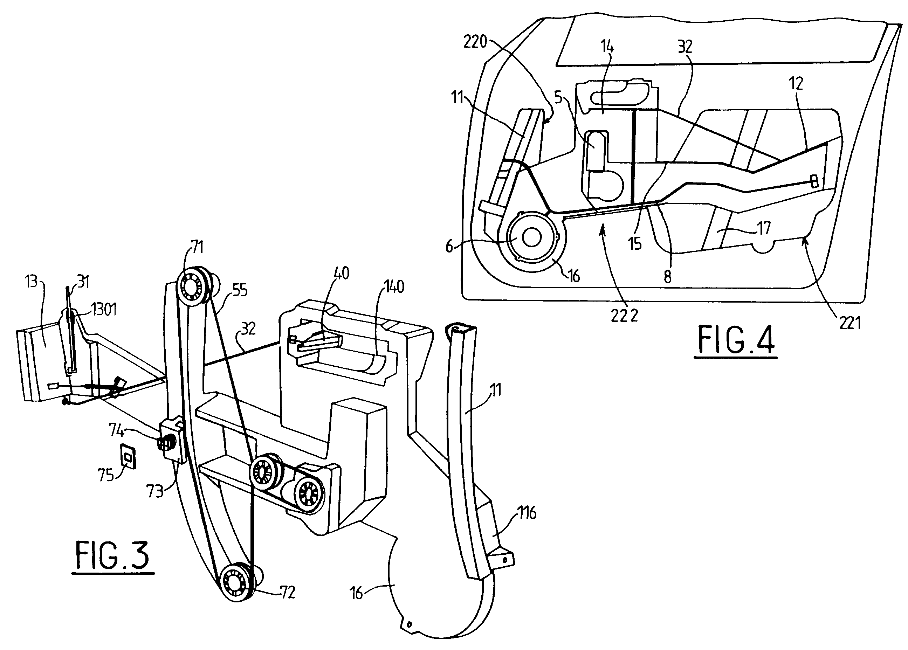

Sur la poutre (15), entre l'élément guide-vitre (11) et la poutre transversale (170), est formée une excroissance (14) orientée vers le haut et comportant un logement (140) destiné à recevoir la poignée (40) d'actionnement du mécanisme intérieur d'ouverture de porte. Cette poignée (40) est montée à l'aide d'un axe (42) et d'un ressort de rappel (41) dans les perçages (143) pratiqués dans le logement (140). La poignée (40) se prolonge de l'autre côté du logement (140) visible sur la figure 3 par une excroissance qui passe dans une lumière (144) et sur laquelle vient se fixer la tringle (32) d'actionnement du mécanisme de serrure de porte (3) qui se trouve monté à l'extrémité d'un prolongement (12) de la poutre principale (15) constitué par le prolongement (12) et une portion (13) perpendiculaire à ce prolongement (12) orientée vers l'intérieur de la carcasse de porte de façon à se situer substantiellement en vis-à-vis de la poutre (15). Le prolongement (12) de la poutre principale (15) se trouve dans un plan décalé situé vers l'intérieur de l'habitacle par rapport à la poutre principale (15) d'une distance (d), comme représenté sur la figure 1.

La surface perpendiculaire (13) permet la fixation du boîtier (3) comportant le mécanisme de serrure de porte auquel la tringle de commande d'ouverture de porte (32) est reliée. Une tringle (31) de voyant de verrouillage de porte qui passe dans un orifice (1301) pratiqué dans une excroissance (130) du prolongement de poutre (12, 13) est également reliée au mécanisme de serrure de porte.

Enfin, la poutre comporte une gorge ou rainure (151) circulant le long de la poutre principale et du prolongement (12). Cette gorge se ramifie vers l'excroissance haute (14) et vers l'excroissance basse (16) pour permettre le passage du faisceau conducteur (8) qui permet par le connecteur (86) de brancher le haut-parleur (6), le connecteur (81) de brancher les boutons de commande du lève-vitre électrique, le connecteur (85) de brancher le moteur du lève-vitre électrique, le connecteur (83) de commander électriquement la serrure de porte, le connecteur (80) de transmettre les signaux d'éclairage des feux de porte et le connecteur (82) de recevoir les signaux de commande provenant de l'installation électrique du véhicule.

Ainsi, en intégrant dans une structure en plastique moulée toutes les fonctions qui se trouvent à l'intérieur d'une carcasse de porte, on a réalisé un ensemble qui peut être pré-assemblé et monté sur des portes à carcasse traditionnelle sans modifier la structure des portes de façon que ces carcasses bénéficient d'une rigidité suffisante pendant les périodes de stockage, évitant ainsi la déformation des portes et ensuite, en cours d'utilisation ou de montage, afin d'éviter la définition de portes présentant des renforts particuliers pour s'adapter à une platine telle que celle du brevet américain 4 882 842.

La platine de l'invention, après avoir été préparée, est introduite dans la porte en faisant pénétrer par l'ouverture (220) et respectivement l'ouverture (221) les extrémités supérieures de l'élément guide-vitre (11) et respectivement de la poutre transversale (170). Puis, en faisant pivoter légèrement la platine, on fait pénétrer l'extrémité inférieure (172) de la poutre transversale (170).

Une fois les éléments guide-vitre (11) et la poutre transversale (170) introduits à l'intérieur de la carcasse de porte, on assemble la vitre (23) sur le cavalier lève-vitre (73) et on fixe la platine par les points de fixation qui sont situés à proximité des extrémités supportant les efforts principaux, de façon à rendre ces éléments solidaires de la tôle intérieure de la porte. Lorsque la platine intérieure est fixée à la porte et la vitre montée, une feuille de couverture (24) est fixée sur la tôle interne (221) et le tout est recouvert de la garniture intérieure (25).

On comprend que l'on a ainsi réalisé un ensemble moulé, de montage facile, qui ne modifie pas la structure de la porte et lui conserve, par le lien central (222) pourvu des bossages (2220), une rigidité suffisante renforcée par les formes du bossage (2220).

Toute modification à la portée de l'homme de métier fait également partie de l'esprit de l'invention.

## Revendications

1. Platine de porte de véhicule intégrant la fonction lève-vitre et au moins une autre fonction, caractérisée en ce qu'elle est incorporée dans une porte de structure traditionnelle, constituée par une coquille emboutie formée d'un panneau métallique extérieur (21) relié à un panneau métallique intérieur (22) découpé de façon à présenter au moins deux ouvertures (220, 221) séparées par un lien (222) de tôle de rigidification disposé de façon substantiellement transversale par rapport à une direction longitudinale de la porte, une des ouvertures (220) permettant le passage d'un élément guide-vitre (11), cet élément (11) étant intégré à une extrémité de la platine (1) qui est réalisée en matière plastique moulée et la deuxième ouverture (221) permettant le passage de la partie de platine (170) supportant la fonction lève-vitre de façon que les parties de platines constituant la fonction lève-vitre (170) et la fonction guide-vitre (11) soient situées dans un même plan à l'intérieur de la coquille alors qu'au moins une partie (15) de la platine est montée à l'extérieur de la coquille sur le lien (222) de tôle de rigidification.

2. Platine de porte de véhicule selon la revendication 1, caractérisée en ce que la partie de platine (170) constituant la fonction lève-vitre est constituée d'une poutre transversale (170) moulée et disposée de façon substantiellement transversale par rapport à une direction principale (15) de la platine constituée notamment par une poutre principale (15) à une extrémité de laquelle est disposée la fonction guide-vitre (11).

3. Platine de porte de véhicule selon la revendication 1 ou 2, caractérisée en ce que la poutre comporte à l'extrémité opposée de celle comportant la fonction guide-vitre un support (13) permettant l'intégration du mécanisme de serrure (3).

4. Platine de porte de véhicule selon la revendication 3, caractérisée en ce que ledit support (13) comporte une excroissance (130) vers le haut constituant un guide (1301) pour la tringle (31) du bouton voyant de fermeture de porte.

5. Platine de porte de véhicule selon la revendication 2, caractérisée en ce que la poutre principale comporte entre le guide-vitre (11) et le lève-vitre (170) une excroissance (14) formant un logement (140) pour le mécanisme (40) de poignée intérieure de commande d'ouverture de porte, ledit logement (140) comportant des perçages (143) pour recevoir l'axe de pivotement (42) de la poignée (40) et étant pourvu d'une lumière (144) permettant le passage de la tringle (32) de commande reliant la poignée intérieure (40) au mécanisme de serrure (3).

6. Platine de porte de véhicule selon la revendication 2 ou 5, caractérisée en ce que la poutre (15) comporte à proximité de l'extrémité supportant le guide-vitre (11) une excroissance (16) destinée à former un logement (160) pour recevoir un haut-parleur.

7. Platine de porte de véhicule selon la revendication 2, caractérisée en ce que les extrémités de la poutre transversale (170) constituant des logements pour les axes de pivotement des poulies (71, 72) montés à chaque extrémité (171, 172) de la poutre transversale pour constituer les éléments de guidage d'un câble d'entraînement (55) d'un cavalier (73) lève-vitre monté coulissant sur un des éléments longitudinaux (1702) de la poutre.

8. Platine de porte de véhicule selon la revendication 7, caractérisée en ce que l'élément longitudinal de la poutre comporte une lèvre (1702) formant une équerre sous laquelle vient glisser un patin relié par des moyens au cavalier lève-vitre.

9. Platine de porte de véhicule selon la revendication 2 ou 8, caractérisée en ce que la poutre principale (15) comporte un évidement (150) permettant le montage du moteur (5) électrique d'entraînement de poulies (52, 54) d'actionnement du câble.

10. Platine de porte de véhicule selon une des revendications précédentes, caractérisée en ce que la poutre comporte une gorge (151) permettant la mise en place d'un faisceau (8) de conducteurs électriques destinés à transmettre les signaux électriques vers le moteur lève-vitre (5), la serrure électrique (3) et le haut-parleur (6).

11. Platine de porte de véhicule selon une des revendications précédentes, caractérisée en ce qu'elle est montée sur la feuille métallique interne (22) de la porte par des vis de fixation situées à proximité des points intégrant les éléments mécaniques supportant des efforts.

12. Platine de porte de véhicule selon la revendication 11, caractérisée en ce que le guide-vitre (11) est fixé à ses extrémités (111, 112) sur la porte.

13. Platine de porte de véhicule selon la revendication 11, caractérisée en ce que la poutre transversale (170) de support du chariot lève-vitre (73) est fixée à proximité des deux extrémités (171, 172) supportant les poulies de renvoi.

14. Platine de porte de véhicule selon la revendication 11, caractérisée en ce qu'elle est également fixée à proximité du logement (140) recevant la poignée (4) d'actionnement du mécanisme (3) d'ouverture et de fermeture de porte.

15. Procédé de montage d'une platine selon une des revendications précédentes caractérisé en ce qu'il consiste :
- à glisser l'extrémité du guide-vitre (11) et de la poutre lève-vitre (170) sous les ouvertures (220, 221) du panneau métallique intérieur (22) embouti en positionnant le reste de la platine sur la forme correspondante (2220) prévue à cet effet sur le lien (22) du panneau intérieur ;
- à fixer le guide-vitre (11), la poutre lève-vitre (170), la partie support (140) de la poignée d'actionnement, et le support (160) de haut-parleur (6) sur le panneau intérieur (22) par des vis placées à proximité des points d'effort.

## Claims

1. A vehicle door equipment plate integrating the window-raising function and at least one other function, characterized in that it is incorporated in a door with a conventional structure, constituted by a stamped shell formed by an external metal panel (21) joined to an internal metal panel (22) cut out so as to have at least two openings (220, 221), separated by a tie (222) made of a stiffening plate disposed in a substantially transverse manner relative to a longitudinal direction of the door, one of the openings (220) allowing a window guide element (11) to pass, this element (11) being joined to one end of the plate (1) which is made of a moulded plastic material, and the second opening (221) allowing the plate part (170) supporting the window-raising function to pass, so that the plate parts constituting the window-raising function (170) and the window guiding functions (11) are situated in the same plane inside the shell, while at least one part (15) of the plate is mounted outside the shell on the tie (222) of the stiffening plate.

2. A vehicle door equipment plate according to claim 1, characterized in that the plate part (170) constituting the window-raising function is constituted by a moulded cross bar (170) and disposed in a substantially transverse manner relative to one main direction of the plate (15), constituted in particular by a main bar (15), at one end whereof there is disposed the window-guiding function (11).

3. A vehicle door equipment plate according to claim 1 or 2, characterized in that the bar comprises, at the opposite end to that comprising the window-guiding function (11), a support (13) allowing the locking mechanism (3) to be integrated.

4. A vehicle door equipment plate according to claim 3, characterized in that the said support (13) comprises an upward projection (130) constituting a guide (1301) for the rod (31) for the door closure indicator button.

5. A vehicle door equipment plate according to claim 2, characterized in that the main bar comprises between the window guide (11) and the window-raising mechanism (170), a projection (14) forming a recess (140) for the mechanism (40) of the internal handle for actuating the opening of the door, the said recess (140) comprising holes (143) for receiving the swivel pin (42) of the handle (40) and being provided with a port (144) allowing the actuating rod (32) connecting the internal handle (40) to the locking mechanism (3) to pass.

6. A vehicle door equipment plate according to claim 2 or 5, characterized in that the bar (15) comprises in the vicinity of the end supporting the window guide (11) a projection (16) intended to form a recess (160) for receiving a loudspeaker.

7. A vehicle door equipment plate according to claim 2, characterized in that the ends of the cross bar (170) form recesses for the pivot pins of the pulleys (71, 72) mounted at each end (171, 172) of the cross bar, so as to constitute the elements for guiding a cable (55) for entraining a window-raising rider (73) slidably mounted on one of the longitudinal elements (1702) of the bar.

8. A vehicle door equipment plate according to claim 7, characterized in that the longitudinal element of the bar comprises a lip (1702) forming an angle bracket under which a skid connected by some means to the window-raising rider comes to slide.

9. A vehicle door equipment plate according to claim 2 or 8, characterized in that the main bar (15) comprises a cutout (150) permitting the mounting of the electric motor (5) for driving the pulleys (52, 54) for actuating the cable.

10. A vehicle door equipment plate according to one of the preceding claims, characterized in that the bar has a groove (151) allowing a bundle (8) of electrical conductors to be placed in position, which are intended to transmit the electrical signals to the window-raising motor (5), the electric lock (3) and the loudspeaker (6).

11. A vehicle door equipment plate according to one of the preceding claims, characterized in that it is mounted on the internal metal plate (22) of the door by fixing screws situated in the vicinity of the points integrating the stress-bearing mechanical elements.

12. A vehicle door equipment plate according to claim 11, characterized in that the window guide (11) is fixed to the door at its ends (11, 112).

13. A vehicle door equipment plate according to claim 11, characterized in that the cross bar (170) for supporting the window raising slider (73) is fixed in the vicinity of the two ends (171, 172) supporting the guide pulleys.

14. A vehicle door equipment plate according to claim 11, characterized in that it is also fixed in the vicinity of the recess (140) receiving the handle (4) for actuating the mechanism (3) for the opening and closing of the door.

15. A method for mounting an equipment plate according to one of the preceding claims, characterized in that it lies:
- in sliding the end of the window guide (11) and of the window-raising bar (170) under the openings (220, 221) of the stamped internal metal panel by positioning the rest of the plate on the corresponding shape (2220) provided for this purpose on the tie (22) of the internal panel;
- in fixing the window guide (11), the window-raising bar (170), the part (140) for supporting the actuating handle and the support (160) for the loudspeaker (6) to the internal panel (22) by screws placed in the vicinity of the stress points.

## Patentansprüche

1. Halterung in einer Fahrzeugtür zum Einbau eines Fensterhebers und für mindestens einen weiteren Einbau, dadurch gekennzeichnet, daß die Halterung in einer Tür von herkömmlichem Aufbau, bestehend aus einer ausgewölbten Schale, die aus einer mit einer inneren Metallplatte (22) verbundenen äußeren Metallplatte (21) besteht, eingebaut ist, wobei die innere Metallplatte (22) so zugeschnitten ist, daß sie mindestens zwei durch ein im wesentlichen quer zu einer Längsrichtung der Tür angeordnetes Verbindungsstück (222) aus einem Versteifungsblech getrennte Öffnungen (220, 221) aufweist, wobei eine der Öffnungen (220) für den Durchgang einer an einem Ende der Halterung (1) aus verformbarem, plastischem Material angeordneten Fensterführungseinrichtung (11) und die zweite Öffnung (221) für den Durchgang des Teils der Halterung (170), auf der die Fensterhebeeinrichtung angeordnet ist, vorgesehen ist, derart, daß die Teile der Halterung (170) für die Fensterhebeeinrichtung und die Fensterführungseinrichtung (11) in derselben Ebene im Inneren der Schale angeordnet sind, während wenigstens ein Teil (15) der Halterung außerhalb der Schale auf dem Verbindungsstück (222) auf dem Versteifungsblech angeordnet ist.

2. Halterung in einer Fahrzeugtür nach Anspruch 1, dadurch gekennzeichnet, daß der für die Einrichtung des Fensterhebers vorgesehene Teil der Halterung (170) aus einem geformten Querträger (170) besteht und im wesentlichen quer zu einer Hauptrichtung (15) der Halterung angeordnet ist, die insbesondere aus einem Hauptträger (15) besteht, an dessen einem Ende die Fensterführungseinrichtung (11) angeordnet ist.

3. Halterung in einer Fahrzeugtür nach Anspruch 1 oder 2, dadurch gekennzeichnet, daß der Träger an dem zur Fensterführungseinrichtung entgegengesetzten Ende einen Halter (13) zur Aufnahme einer Verschließvorrichtung (3) aufweist.

4. Halterung in einer Fahrzeugtür nach Anspruch 3, dadurch gekennzeichnet, daß der genannte Halter (13) einen nach oben gerichteten Ansatz (130) umfaßt, der eine Führung (1301) für den Schaft (31) des sichtbaren Türverschlußknopfes darstellt.

5. Halterung in einer Fahrzeugtür nach Anspruch 2, dadurch gekennzeichnet, daß der Hauptträger zwischen der Fensterführung (11) und dem Fensterheber (170) einen Ansatz (14) aufweist, der eine Aufnahme (140) für die Einrichtung des Innengriffs (40) zur Steuerung der Türöffnung bildet, wobei die genannte Aufnahme (140) Bohrungen (143) zur Aufnahme der Schwenkachse (42) für den Innengriff (40) aufweist und mit einer Einführöffnung (144) für den Schaft (32) zur Verbindung des Innengriffs (40) mit der Verschließvorrichtung (3) versehen ist.

6. Halterung in einer Fahrzeugtür nach Anspruch 2 oder 5, dadurch gekennzeichnet, daß der Träger (15) in der Nähe seines Endes zur Lagerung der Fensterführungseinrichtung (11) einen Ansatz (16) zur Bildung eines Sitzes (160) zur Aufnahme eines Lautsprechers aufweist.

7. Halterung in einer Fahrzeugtür nach Anspruch 2, dadurch gekennzeichnet, daß die Enden des Querträgers (170) Sitze für die Achsen von Seilrollen (71, 72) enthalten, die an jedem Ende (171, 172) des Querträgers angebracht sind, um die Führungselemente eines Antriebskabels (55) eines U-förmigen Fensterheberschlittens (73), der gleitend auf einem der Längsabschnitte (1702) des Trägers befestigt ist, zu bilden.

8. Halterung in einer Fahrzeugtür nach Anspruch 7, dadurch gekennzeichnet, daß der Längsabschnitt des Trägers eine ein Winkelteil bildende Lippe (1702) aufweist, unter der eine dem U-förmigen Fensterheberschlitten zugeordnete Kufe gleitet.

9. Halterung in einer Fahrzeugtür nach Anspruch 2 oder 8, dadurch gekennzeichnet, daß der Hauptträger (15) eine Aussparung (150) für den Einbau eines Elektromotors (5) zum Antrieb der Seilrollen (52, 54) für die Seilbetätigung aufweist.

10. Halterung in einer Fahrzeugtür nach einem der vorhergehenden Ansprüche, dadurch gekennzeichnet, daß der Träger eine Nut (151) zur Aufnahme eines Bündels (8) von elektrischen Leitern aufweist, die dazu bestimmt sind, dem Fensterhebermotor (5), der elektrischen Verschließvorrichtung (3) und dem Lautsprecher (6) elektrische Signale zuzuleiten.

11. Halterung in einer Fahrzeugtür nach einem der vorhergehenden Ansprüche, dadurch gekennzeichnet, daß die Halterung auf der inneren Metallplatte (22) der Tür mittels Befestigungsschrauben, die in der Nähe der Punkte angeordnet sind, die die mechanischen Elemente zur Aufnahme der Belastungen aufweisen, befestigt ist.

12. Halterung in einer Fahrzeugtür nach Anspruch 11, dadurch gekennzeichnet, daß die Fensterführung (11) mit ihren Enden (111, 112) an der Tür befestigt ist.

13. Halterung in einer Fahrzeugtür nach Anspruch 11, dadurch gekennzeichnet, daß der Querträger (170) zur Lagerung des Fensterheberschlittens (73) in der Nähe der beiden Enden (171, 172) für die Lagerung der Seilumlenkrollen befestigt ist.

14. Halterung in einer Fahrzeugtür nach Anspruch 11, dadurch gekennzeichnet, daß die Halterung ebenfalls in der Nähe der Aufnahme (140) für den Handgriff (4) zur Betätigung der Türöffnungs- und -verschließvorrichtung (3) befestigt ist.

15. Verfahren zum Einbau einer Halterung nach einem der vorhergehenden Ansprüche, gekennzeichnet durch
- Einschieben des Endes der Fensterführung (11) und des Trägers (170) des Fensterhebers durch die Öffnungen (220, 221) der inneren gewölbten Metallplatte (22), wobei der Rest der Halterung auf der entsprechenden, zu diesem Zweck auf dem Verbindungsstück (22) der inneren Platte vorgesehenen Form (2220) positioniert wird; und
- Befestigen der Fensterführung (11), des Trägers (170) des Fensterhebers, der Aufnahme (140) für den Betätigungsgriff und des Sitzes (160) des Lautsprechers (6) auf der inneren Platte (22) mittels der in der Nähe der Belastungspunkte angeordneten Schrauben.
